# EUROPÄISCHE PATENTSCHRIFT

(11) **EP 0 978 005 B1**
(45) Veröffentlichungstag und Bekanntmachung des Hinweises auf die Patenterteilung: **27.03.2002**
(21) Anmeldenummer: 98921483.8
(22) Anmeldetag: 23.04.1998
(51) Int. Cl.: G02B 6/34, G02B 6/36

(54) **MINIATURISIERTES OPTISCHES BAUELEMENT SOWIE VERFAHREN ZU SEINER HERSTELLUNG**
A MINIATURIZED OPTICAL COMPONENT, AND MANUFACTURE OF SAME
COMPOSANT OPTIQUE MINIATURISE, ET MODE DE FABRICATION

(30) Priorität: 23.04.1997 DE 19717015
(43) Veröffentlichungstag der Anmeldung: 09.02.2000
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); LACHER, Manfred, D-55116 Mainz (DE); WEBER, Lutz, D-55288 Gabsheim (DE); PECH, Bernhard, D-55118 Mainz (DE); HOSSFELD, Jens, D-61381 Friedrichsdorf (DE); DIEHL, Thorsten, D-64405 Fischbachtal (DE)
(74) Vertreter: Fuchs Mehler Weiss & Fritzsche
(86) Internationale Anmeldenummer: EP9802402
(87) Internationale Veröffentlichungsnummer: WO9848307

(56) Entgegenhaltungen:
- EP-A- 0 176 623
- EP-A- 0 194 613
- DE-A- 4 212 208
- DE-A- 4 423 842
- PATENT ABSTRACTS OF JAPAN vol. 010, no. 341 (P-517), 18. November 1986 & JP 61 144609 A (OMRON TATEISI ELECTRONICS CO), 2. Juli 1986 in der Anmeldung erwähnt

## Beschreibung

Die Erfindung betrifft ein miniaturisiertes optisches Bauelement aus mindestens zwei Bauteilen, von denen mindestens ein Bauteil optische Mikrostrukturen aufweist, wobei die Bauteile beabstandet zueinander über mindestens einen Abstandsformkörper miteinander verbunden sind, und die Bauteile und der Abstandsformkörper selbstjustierende Justagemittel für eine präzise Relativjustage beim Zusammensetzen der Bauteile und des Abstandsformkörpers aufweisen. Die Erfindung bezieht sich auch auf ein Verfahren zur Herstellung solcher miniaturisierter optischer Bauelemente.

Komplexe optische miniaturisierte Bauelemente wurden bisher in der Weise hergestellt, daß die Einzelkomponenten wie Beugungsgitter, Spiegel usw. in getrennten Fertigungsverfahren hergestellt, dann sorgfältig justiert und montiert werden mußten. Für die Massenfertigung waren diese Verfahren nicht geeignet, weil jedes optische miniaturisierte Bauelement die aufwendige Justierung der Einzelkomponenten erforderlich machte.

Um hier Abhilfe zu schaffen, wurde in der DE 3611246 C2 vorgeschlagen, die optischen Komponenten des Bauelementes einschließlich des oder der Echelette-Gitter auf röntgenlithographischem, röntgentiefenlithographischgalvanoplastischem oder hiervon abgeleiteten abformtechnischem Wege herzustellen, wobei die Gitterlinien parallel zur Röntgenstrahlung verlaufen. Dieses Verfahren hat jedoch den Nachteil, daß dreidimensionale Strukturen, wie z.B. in zwei Ebenen gekrümmte Spiegel nicht hergestellt werden können, weil in Richtung der Röntgenstrahlung wegen der geradlinigen Ausbreitung keine Strukturierung möglich ist.

Bei den mikrotechnischen Verfahren eröffnet die LIGA-Technik eine große Form- und Materialvielfalt sowie eine hohe Präzision der Detailstrukturen (s. z.B. W. Ehrfeld. H. Lehr, Rad. Physics and Chemistry, 1995. Pergamon Press). Dabei entstehen Formeinsätze, die durch verschiedene Abformtechniken als Kunststoff-, Metall- oder Keramikteil repliziert werden können und eine Strukturierung nur an den Seitenwänden des Hohlkörpers aufweisen.

Durch die Abformung eines mittels LIGA-Technik gefertigten, geöffneten Hohlkörpers wird dessen Seitenwandprofil (z.B. Gitter, Spiegel) übertragen. Die optischen Elemente weisen dabei nur in einer Ebene eine Krümmung auf, so daß eine Fokussierung des Lichts nur in dieser Ebene stattfindet. Bei der Herstellung miniaturisierter optischer Bauelemente wird zur Führung und Begrenzung des Lichtwegs in der dazu senkrechten Richtung deshalb eine Schichtwellenleiteranordnung eingesetzt, deren Höhe beschränkt ist (vgl. z.B. Interdisciplinary Science Reviews, 1993, 18, No. 3, S. 273).

Es ist daher wünschenswert, eine Freistrahloptik bei miniaturisierten Bauelementen zu realisieren, bei der die Lichtstrahlen sich ungehindert im miniaturisierten optischen Bauelement ausbreiten können. Es muß daher nach einem Herstellungsverfahren gesucht werden, das es gestattet, in zwei Ebenen gekrümmte Seitenwände des miniaturisierten Bauelementes zu fertigen und damit eine Fokussierung des Lichts in zwei zueinander senkrechten Ebenen sowie eine verbesserte Auflösung zu realisieren.

Aus der US 5.521.763 ist ein optisches Bauelement bekannt, das allerdings kein miniaturisiertes Bauelement mit optischer Mikrostruktur darstellt. Auf einer gemeinsamen Grundplatte sind eine toroidale Linse, ein polygonaler Spiegel sowie ein Detektor angeordnet. Es handelt sich jedoch nicht um selbstjustierende Justagemittel, da die Steckelemente in Langlöchern eingesetzt werden. Eine Fixierung erfolgt mit Klebstoff und Federn.

Das japanische Abstract 61-144609(A) bezeichnet ein optisches Kuppelelement, das zwei optische Komponenten umfaßt, die auf einer vertikalen Grundplatte befestigt sind. Über die Art der Befestigung und der Justierung werden keine Angaben gemacht.

Aus der EP 0 194 613 ist ein Verfahren zur justierten Montage optischer Bauteile bekannt. Die optischen Bauteile werden mit genauer Lage und Ausrichtung hergestellt und in definierter Weise zusammengesetzt und fixiert. Als Justageelemente weisen die Bauteile stufenartige Strukturen auf. Über Abstandsformkörper, die entsprechende Justagestrukturen besitzen, werden die optischen Bauteile im Abstand zueinander angeordnet. Die Einzelteile müssen für die Montage zusammengestellt werden, wobei darauf geachtet werden muß. welche Bauteile wie zusammengefügt werden müssen.

Es ist daher Aufgabe der Erfindung, ein miniaturisiertes optisches Bauelement aus mehreren Teilen bereitzustellen, deren Montage vereinfacht ist. Es ist auch Aufgabe der Erfindung, ein Verfahren zur Herstellung solcher optischer Bauelemente hereitzustellen, wobei eine Massenfertigung möglich sein soll.

Das miniaturisierte optische Bauelement ist dadurch gekennzeichnet, daß mindestens zwei Teile über Verbindungsmittel miteinander verbunden sind und eine zusammenhängende Einheit bilden.

Die Verbindungsmittel gewährleisten eine Zuordnung der miteinander verbundenen Einzelteile, so daß bei der Montage die zusammengehörigen Bauteile sofort erkennbar sind. Die Verbindungsmittel sind vorzugsweise so ausgestaltet und an den Bauteilen angebracht, daß der Zusammenbau eindeutig festgelegt ist.

Ein weiterer Vorteil besteht darin, daß die Verbindungsmittel eine Verliersicherung darstellen.

Gerade bei der Massenfertigung werden die Einzelbauteile im Set angeboten und erst beim Anwender zusammengebaut. Damit die einzelnen zusammengehörigen Teile nicht verloren gehen, ist es von Vorteil, wenn alle Bauteile über geeignete Verbindungsmittel miteinander verbunden sind und eine zusammenhängende Einheit bilden. Diese Verbindungsmittel sind vorzugsweise elastisch und können beispielsweise elastische Faserbändchen oder Filmscharniere sein. Vorteilhafterweise sind diese Verbindungsmittel aus demselben Material gefertigt wie die Bauteile, wodurch auch der Herstellungsvorgang vereinfacht wird.

Die elastischen Verbindungsmittel sind vorzugsweise an der nicht strukturierten Wandfläche der Teile angeordnet, was den Vorteil hat, daß die einzelnen Teile zusammengefügt werden können, ohne daß die Verbindungsmittel durchtrennt werden müssen. Die Einzelteile können auch wieder auseinandergebaut werden und bleiben über die Verbindungsmittel miteinander verbunden.

Ein gesonderter Justagevorgang bei der Montage der einzelnen Teile oder eine Nachjustage entfallen, weil sich durch die an den Teilen angebrachten Justagemittel die gewünschte gegenseitige Ausrichtung und Positionierung der Teile automatisch einstellt. Beim Zusammensetzen der Teile wird eine präzise Relativjustage von ca. 1 µm erreicht. Als Justagemittel können Vorsprünge, Vertiefungen, Steckelemente, Schnappelemente oder Schiebeelemente vorgesehen sein. Welche Art Justagemittel verwendet wird, hängt nicht nur von der Anzahl der Teile und deren gegenseitiger Anordnung, sondern auch von der gewünschten Präzision ab. Die Justagemittel wirken vorzugsweise formschlüssig zusammen.

Dadurch, daß mehrere Einzelteile hochpräzise zusammengebaut werden können, ist die geometrische Ausführungsform des optischen Bauelements variabel. Dies ist insbesondere dann wichtig, wenn z.B. Miniaturspektrometer hergestellt werden sollen, weil auf diese Art und Weise eine Freistrahloptik realisiert werden kann.

Zwischen den Bauteilen verbleibt ein Freiraum, so daß die Lichtausbreitung nur im materialfreien Raum stattfindet. Dadurch wird der Vorteil erzielt, daß keine auflösungsvermindernde Dispersion, wie z.B. in Glas oder Kunststoff auftritt.

Vorzugsweise sind die optischen Mikrostrukturen nur auf einer Seite der Teile angeordnet, was die Herstellung mit entsprechenden Formen vereinfacht.

Vorzugsweise ist der Abstandsformkörper eine Grundplatte, insbesondere eine für die übrigen Teile gemeinsame Steckplatte, deren Justagemittel mit entsprechenden Justagemitteln an den übrigen Teilen zusammenwirken. Die Justagemittel können Ausnehmungen und/oder Vorsprünge sein, in die die übrigen Teile mit entsprechenden Justagemitteln eingesteckt werden. Insbesondere bei der Massenfertigung miniaturisierter Formenkörper kann durch unterschiedlich ausgebildete Steckplatten die gegenseitige Zuordnung der übrigen Teile auf einfache Weise variiert werden, ohne daß die übrigen Einzelbauteile, die mit Strukturen an ihren Oberflächen versehen sind, verändert werden müssen. Dadurch wird eine hohe Flexibilität unter Beibehaltung der Präzision bezüglich der gegenseitigen Anordnung erzielt.

Die Justagemittel sind vorzugsweise an die Teile angeformt oder in diese eingeformt. Die Herstellung und Anbringung der Justagemittel wird somit in den Herstellungsvorgang der Teile verlagert, so daß die Justierung der Teile durch die Form für die Herstellung der Teile festgelegt wird. Es sind somit lediglich hochpräzise Formen erforderlich, mit denen eine Massenfertigung hochpräziser Bauteile mit integrierten Justagemitteln möglich ist.

Wenn das optische Bauelement ein miniaturisiertes Spektrometer ist, weist das erste Bauteil vorzugsweise mindestens eine planare oder gekrümmte Beugungsgitterstruktur und/oder mindestens eine Anschlußstruktur für polychromatisches und/oder monochromatisches Licht auf. In einer speziellen Ausführungsform zeigt das im zusammengesetzten Zustand dem als Gitterträgerteil ausgebildeten Bauteils gegenüberliegende Teil mindestens eine planare oder gekrümmte Hohlspiegelstruktur.

Gemäß einer weiteren Ausführungsform kann das erste Bauteil eine gekrümmte Beugungsgitterstruktur und ein zweites Bauteil mindestens eine Anschlußstruktur für Licht aufweisen.

Vorzugsweise weist mindestens ein Bauteil mindestens eine Ausnehmung zur Aufnahme eines Detektors auf.

Damit das Mikrospektrometer lichtdicht zur Umgebung abgeschlossen ist, ist mindestens ein Abdeckteil vorgesehen, das Justagemittel aufweist, die mit entsprechenden Justagemitteln an mindestens einem der übrigen Bauteile zusammenwirken. Das Abdeckteil kann auch U-förmig sein und somit drei Wände aufweisen.

Das Verfahren zur Herstellung solcher miniaturisierter Bauelemente ist dadurch gekennzeichnet, daß die Bauteile und der mindestens eine Abstandsformkörper zusammen mit ihren selbstjustierenden Justagemitteln jeweils in einem Schritt auf abformtechnischem Wege hergestellt werden, wobei mindestens zwei Teile gemeinsam und über Verbindungsmittel als zusammenhängende Einheit gefertigt werden.

Die Verbindungsmittel bestehen vorzugsweise aus demselben Material wie die Bauteile und können daher vorteilhafterweise im selben Fertigungsschritt hergestellt werden.

Es ist auch möglich, bei oder vor der Fertigung der Bauteile vorgefertigte Verbindungsmittel einzulegen, wobei die Verbindungsmittel auch aus anderen Materialien als die Bauteile bestehen können.

Vorteilhafterweise wird ein mikrotechnisch hergestellter Formeinsatz verwendet, weil die abformtechnische Herstellung eine kostengünstige Fertigung in großen Stückzahlen erlaubt.

Durch die abformtechnische Herstellung der Teile unter Verwendung eines mikrotechnischen Formeinsatzes können Funktionseinheiten des Spektrometers mit ganz unterschiedlichen Abmessungen und Präzisionsanforderungen wie Wände, Justagemittel und optisches Gitter gleichzeitig gefertigt werden. Daraus resultiert ein kostengünstiger Herstellungsprozeß bei gleichzeitig hoher Qualität und Präzision.

Weil die Bauteile mit der jeweils zugeordneten Justagestruktur gemeinsam hergestellt werden und dazu ein mikrotechnischer Formeinsatz verwendet wird, wird eine sehr hohe Präzision von ca. 1µm für die Relativlage der Teile beim Zusammenbau erreicht.

Weil sich in einer speziellen Ausgestaltung die Mikrostrukturen nur auf jeweils einer Seite der Teile befinden, ist für die abformtechnische Herstellung nur ein im wesentlichen planarer Formeinsatz mit Mikrostrukturen auf der Oberseite notwendig. Ein solcher Formeinsatz kann aber besonders gut mit mikrotechnischen Verfahren realisiert werden.

Bei der abformtechnischen Fertigung des Spektrometers können Einlegeteile vorgesehen werden. Diese Einlegeteile werden in das Formnest eingebracht und bei der Formfüllung von der Formmasse teilweise oder vollständig umschlossen. Dabei kann es vorteilhaft sein, einen möglichst großen Bereich der Form bereits durch die Einlegeteile auszufüllen, so daß nur wenig Raum für die Formmasse verbleibt.

Durch die Verwendung von Einlegeteilen hat man den Vorteil, daß Schwindung und Verzüge des Spektrometers bei der abformtechnischen Herstellung minimiert werden. Weiterhin ist es vorteilhaft, wenn die Einlegeteile aus einem stabilen Werkstoff (z.B. was Temperatur- und Klimaschwankungen angeht) bestehen. Durch diese Maßnahme erhält das Spektrometer insgesamt eine hohe Stabilität.

Als bevorzugtes Herstellungsverfahren sind Spritzgieß-, Reaktionsgieß- oder Spritzprägeverfahren möglich. Alle Teile können als zusammenhängende Einheit gefertigt werden, wobei entsprechende Verbindungsmittel zwischen den einzelnen Bauteilen beim Herstellungsvorgang mit ausgebildet werden. Die einzelnen Teile können auf diese Art und Weise nicht verloren gehen. Der Anwender kann die einzelnen Bauteile an den Verbindungsmitteln durchtrennen und dann die jeweiligen Bauteile miteinander verbinden. Je nach Art und Elastizität der Verbindungsmittel sowie deren Anbringung an den Teilen ist es auch möglich, die einzelnen Teile verbunden zu lassen und trotzdem zusammenstecken zu können.

Wenn die Teile nach dem Formvorgang noch weiter bearbeitet werden sollen, wie dies bei optischen Bauteilen der Fall ist, die z.B. noch verspiegelt werden müssen, empfiehlt es sich, die Teile so herzustellen, daß alle mit Strukturen versehenen Wandflächen der Teile in einer gemeinsamen Ebene liegen. Es ist dadurch möglich, die aus mehreren Teilen bestehende Einheit in eine Beschichtungsanlage einzuführen und den Beschichtungsvorgang lediglich von einer Seite aus durchzuführen.

Es ist damit auf einfache Weise möglich, die in einer gemeinsamen Ebene liegenden Strukturen flächen- und/oder strukturselektiv zu bearbeiten. Als geeignete Verfahren sind hierfür Plasmaverfahren, Aufdampfverfahren. Sputtern oder Galvanisierverfahren denkbar. Vorzugsweise wird eine flächen- und/oder strukturselektive Verspiegelung durchgeführt.

Beispielhafte Ausführungsformen der Erfindung werden nachfolgend anhand der Zeichnungen näher erläutert. Es zeigen:
- Fig. 1: drei miteinander verbundene Teile eines Bauelements,
- Fig. 2: die in Fig. 1 gezeigte Einheit aus drei Teilen in Seitenansicht während eines Beschichtungsvorgangs,
- Fig. 3: das aus drei Teilen zusammengesetzte Bauelement in perspektivischer Darstellung,
- Fign. 4a und 4b: zwei Teile mit einer Schnappverbindung vor und nach dem Zusammensetzen,
- Fign. 5a und 5b: zwei Teile mit einer Schiebeverbindung vor und nach dem Zusammensetzen, und
- Fign. 6 und 7: die miteinander verbundenen Teile eines Bauelementes vor und nach dem Zusammenfügen.

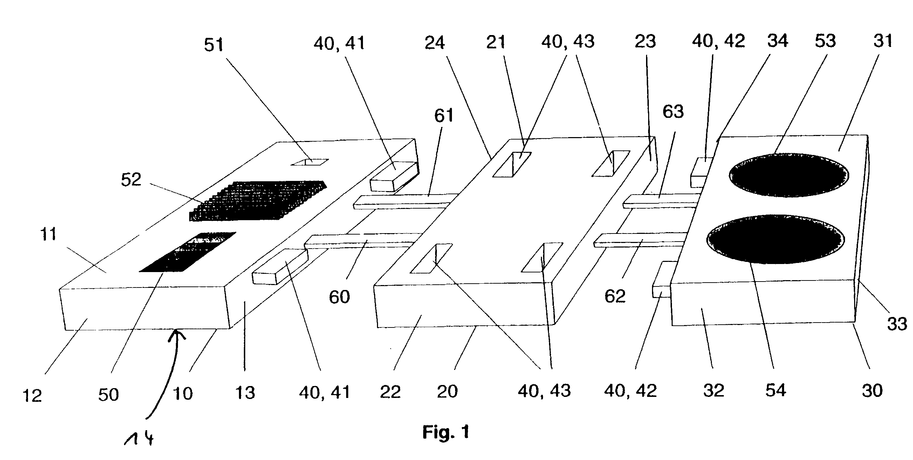

In der Fig. 1 sind drei plattenförmige Teile 10, 20 und 30 perspektivisch dargestellt, die über Verbindungsmittel in Form von Filmscharnieren 60, 61, 62 und 63 miteinander verbunden sind. Die Teile 10 und 30 besitzen optische Strukturen 50, 51, 52, 53 und 54, die zusammen ein Miniaturspektrometer bilden. Das Teil 10 ist ein Gitterträgerteil und besitzt auf seiner Wandfläche 11 eine Struktur 50, in welcher die Bildebene liegt und die beispielsweise eine Aussparung für einen Detektor sein kann, ein ebenes Gitter 52 sowie eine Anschlußstruktur 51. Die Wandfläche 13 ist mit zwei Justagemitteln 40 in Form von quaderförmigen Vorsprüngen 41 versehen. Zwischen diesen beiden Vorsprüngen 41 sind die beiden Filmscharniere 60 und 61 angeordnet. Die untere Wandfläche 14 sowie die übrigen Wandflächen, von denen noch die Wandfläche 12 zu sehen ist, sind nicht strukturiert.

Das weitere Bauteil 30 besitzt auf seiner Wandfläche 31 zwei Hohlspiegelstrukturen 53 und 54, die nebeneinander angeordnet sind. Die Wandfläche 34 trägt Justagemittel 40 ebenfalls in Form von quaderförmigen Vorsprüngen 42, zwischen denen sich die Fimschamiere 62 und 63 befinden. Zwischen den Teilen 10 und 30 befindet sich die als Steckplatte ausgebildete Grundplatte 20, die über ihre Wandflächen 23 und 24 über die Filmschamiere 60 bis 64 mit den Bauteilen 10 und 30 verbunden ist. In der Wandfläche 21 sind als Justagemittel 40 insgesamt vier Ausnehmungen 43 angeordnet, deren Abmessungen auf die Vorsprünge 41 bzw. 42 abgestimmt sind, so daß die Teile 10 und 30 in die Steckplatte 20 formschlüssig eingesteckt werden können. Dazu müssen in dieser Ausführungsform zunächst die Filmschamiere 60, 61, 62, 63 vollständig entfernt werden, wie nachfolgend noch beschrieben wird. Durch die beim Herstellungsvorgang der Teile 10, 20 und 30 festgelegte Anordnung der Justagemittel 40 ist die räumliche Zuordnung der optischen Komponenten 50 bis 54 eindeutig festgelegt.

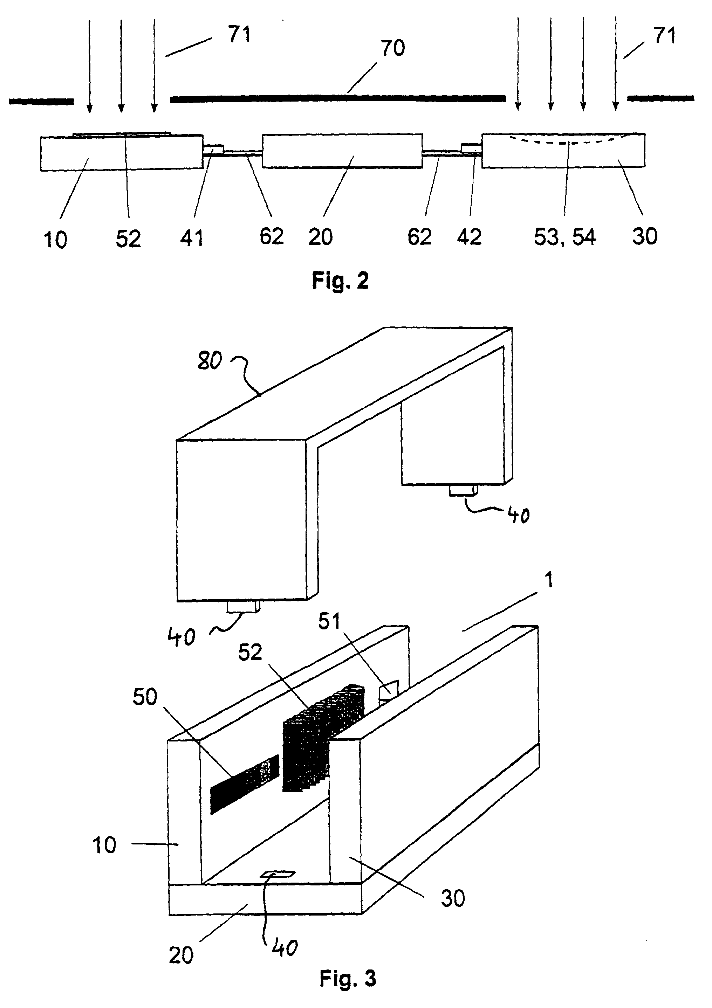

Bevor die einzelnen Teile 10, 20 und 30 zusammengesteckt werden, können sie einer Oberflächenbehandlung unterzogen werden, wie dies in der Fig. 2 dargestellt ist. Da alle optischen Strukturen 50 bis 54 in einer Ebene liegen, können mittels einer einzigen Maske 70 alle Bauteile struktur- oder flächenselektiv beschichtet werden, wobei die Pfeile 71 den Materialfluß während des Beschichtungsvorgangs kennzeichnen.

Nachdem die Teile auf diese Art und Weise oberflächenbearbeitet sind, werden die Teile 10, 20 und 30 an den Filmscharnieren 60 bis 64 durchtrennt bzw. die Filmscharniere werden an der Wandfläche 13 des Teils 10 bzw. der Wandfläche 34 des Teils 30 abgetrennt, so daß die Teile 10 und 30 ungehindert in die Steckplatte 20 zur Bildung eines miniaturisierten optischen Bauelements 1 in Form eines Spektrometers eingesteckt werden können. Dies ist in der Fig. 3 dargestellt. Die gegenseitige Ausrichtung und Anordnung der optischen Komponenten 50 bis 54 ist damit eindeutig vorgegeben, ohne daß es eines weiteren Justagevorgangs bedarf. Der Aufbau wird dadurch weiter stabilisiert, daß ein U-förmiges Abdeckteil 80 mit weiteren Justageelementen 40 aufgesteckt wird. Das Mikrospektrometer wird dadurch auch vor Lichteinfall von außen geschützt.

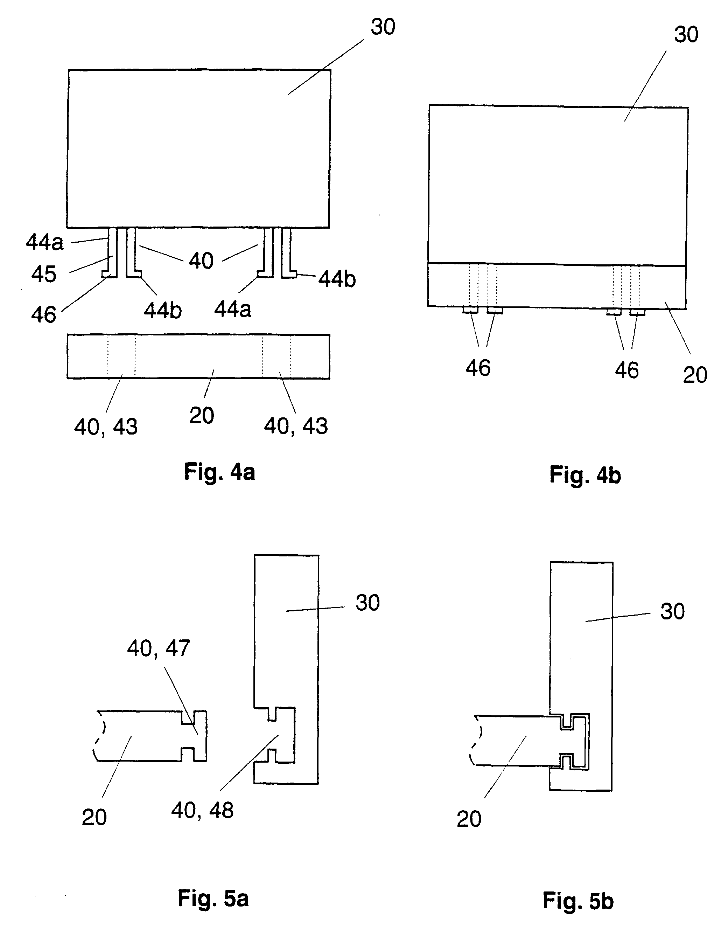

Weitere Ausführungsformen der Justagemittel sind in den Fign. 4a, 4b und 5a sowie 5b dargestellt, wobei die Verbindungsmittel der Übersichtlichkeit halber weggelassen wurden. In der Fig. 4a sind paarweise Schnappelemente 44a und 44b am Teil 30 angeformt. Jedes Schnappelement besteht aus einem langen Schenkel 45, der rechtwinklig am Bauteil 30 angeordnet ist, und einem rechtwinklig dazu angeordneten kurzen Schenkel 46, der am freien Ende des langen Schenkels 45 angeformt ist. Die Steckplatte 20 besitzt als entsprechende Justagemittel 40 Ausnehmungen in Form von Durchbrechungen 43, in die die Schnappelemente 44a und 44b eingeführt werden können. Da die Schnappelementpaare 44a und 44b jeweils elastisch ausgebildet sind, können diese zum Einführen aufeinander zu bewegt werden, so daß die beiden kurzen Schenkel 46 in die Durchbrechung 43 der Steckplatte 20 passen. Wenn die Schnappelemente 44a und 44b vollständig eingesteckt sind, wie dies in der Fig. 4b dargestellt ist, bewegen sich die beiden Schnappelemente 44a und 44b wieder in ihre ursprüngliche Position zurück, wobei die kurzen Schenkel 46 die Steckplatte 20 hintergreifen und auf diese Art und Weise für einen festen unverrückbaren Sitz des Bauteils 30 sorgen.

In der Fig. 5a ist eine weitere Ausführungsform dargestellt. Die Steckplatte 20 besitzt als Justagemittel 40 eine T-förmige Schiene 47, deren entsprechendes Gegenstück im Bauteil 30 in Form einer H-förmigen Ausnehmung 48 vorgesehen ist. Die Steckplatte 20 kann mittels dieses T-förmigen Abschnitts oder T-förmigen Schiene 47 in die H-förmige Ausnehmung 48 eingeschoben werden. wies dies in der Fig. 5b dargestellt ist. Beide Bauteile 20 und 30 sind auf diese Weise zueinander fixiert. Um eine seitliche Verschiebung zu verhindern, weist vorzugsweise die Komponente 30 einen seitlichen Vorsprung auf (nicht sichtbar in Fig. 5a,b), der zur Anschlagsjustage dient.

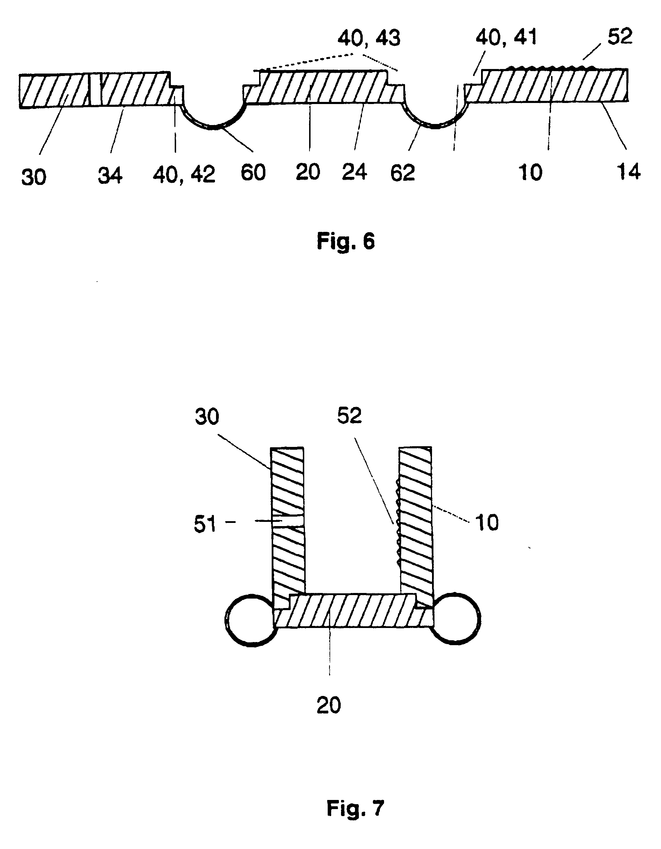

In der Fig. 6 ist eine zusammenhängende Einheit aus drei Teilen 10, 20 und 30 dargestellt, wobei die Filmscharniere 60, 62 jeweils an der Unterseite 14, 24, 24 der Teile 10, 20 und 30 angeordnet sind. Während die Filmscharniere gemäß Fig. 1 aus steifem Material sein konnten, weil sie ohnehin abgetrennt werden, sind die hier gezeigten Filmscharniere 60, 62 elastisch, so daß sie beim Zusammenfügen (s. Fig. 7) an den Teilen 10, 20 und 30 verbleiben können. Das Bauteil 30 weist eine Aufnahme für eine Glasfaser auf und das Bauteil 10 ein konkav gekrümmtes Gitter 52. Außerhalb der in Fig. 6 und 7 dargestellten Schnittebene befindet sich in dem Bauteil 30 eine weitere Aufnahme für einen Detektor.

Weil sich in dieser speziellen Ausgestaltung der Erfindung Mikrostrukturen nur auf jeweils einer Seite der Elemetne 10, 20, 30 befinden, ist für die abformtechnische Herstellung nur ein im wesentlichen planarer Formeinsatz mit Mikrostrukturen auf der Oberseite notwendig. Ein solcher Formeinsatz kann aber besonders gut mit mikrotechnischen Verfahren realisiert werden.

Die Justage wird in diesem Ausführungsbeispiel durch stufenförmige Strukturen 40, 43 erreicht. In einem lithographischen Herstellungsprozeß wird die Kante dieser Strukturen durch die Maske bestimmt und ist daher mit hoher Präzision zu den weiteren Strukturen ausgerichtet.

Eine haltbare Verbindung der Bauteile läßt sich während oder nach der Montage, z.B. durch das Auftragen eines Klebers, durch Laserschweißen oder ähnliche Verbindungstechniken an den Stoßstellen der Einzelteile herstellen.

### Bezugszeichen

- 10: Bauteil
- 11: Wandfläche
- 12: Wandfläche
- 13: Wandfläche
- 14: Wandfläche
- 20: Grundplatte
- 21: Wandfläche
- 22: Wandfläche
- 23: Wandfläche
- 24: Wandfläche
- 30: Bauteil
- 31: Wandfläche
- 32: Wandfläche
- 33: Wandfläche
- 34: Wandfläche
- 40: Justagemittel
- 41: Vorsprung
- 42: Vorsprung
- 43: Ausnehmung
- 44a: Schnappelement
- 44b: Schnappelement
- 45: langer Schenkel
- 46: kurzer Schenkel
- 47: T-förmiger Abschnitt
- 48: H-förmige Ausnehmung
- 50: Bildebene
- 51: Anschlußstruktur
- 52: Plangitterstruktur
- 53: Hohlspiegelstruktur
- 54: Hohlspiegelstruktur
- 60: Fimscharniere
- 61: Filmscharniere
- 62: Filmscharniere
- 63: Filmscharniere
- 70: Maske
- 71: Pfeile für Materialfluß
- 80: Abdeckteil

## Patentansprüche

1. Mininiaturisiertes optisches Bauelement aus mindestens zwei Bauteilen, von denen mindestens ein Bauteil optische Mikrostrukturen aufweist, wobei die Bauteile (10,30) beabstandet zueinander über mindestens einen Abstandsformkörper (20) miteinander verbunden sind, und die Bauteile (10, 30) und der Abstandsformkörper (20) selbstjustierende Justagemittel (40) für eine präzise Relativjustage beim Zusammensetzen der Bauteile (10, 30) und des Abstandsformkörpers aufweisen, **dadurch gekennzeichnet,**
**daß** mindestens zwei Teile (10, 20, 30) mindestens vor dem Zusammensetzen der Teile über Verbindungsmittel (60 - 63) als Verliersicherung miteinander verbunden sind und eine zusammenhängende Einheit bilden.

2. Bauelement nach Anspruch 1, **dadurch gekennzeichnet, daß** der Abstandsformkörper eine für die Bauteile (10, 30) gemeinsame Steckplatte ist, deren Justagemittel (40) mit entsprechenden Justagemitteln (40) an den übrigen Bauteilen (10, 30) zusammenwirken.

3. Bauelement nach einem der Ansprüche 1 oder 2, **dadurch gekennzeichnet, daß** die Justagemittel (40) Steckelemente (41, 42), Schnappelemente (44a, 44b), Schiebeelemente (47, 48), Vorsprünge (41, 42) und/oder Ausnehmungen (43) sind.

4. Bauelement nach einem der Ansprüche 1 bis 3, **dadurch gekennzeichnet, daß** die Justagemittel (40) der Teile (10, 20, 30) angeformt und/oder eingeformt sind.

5. Bauelement nach Anspruch 4, **dadurch gekennzeichnet, daß** die Verbindungsmittel elastische Faserbändchen oder Filmscharniere (60-63) sind.

6. Bauelement nach Anspruch 4 oder 5, **dadurch gekennzeichnet, daß** die Verbindungsmittel aus demselben Material wie die Teile (10, 20, 30) bestehen.

7. Bauelement nach einem der Ansprüche 4 bis 6, **dadurch gekennzeichnet, daß** die Verbindungsmittel elastisch sind und an der der strukturierten Wandfläche (11,31) abgewandten Wandfläche (14,34) der Bauteile (10,30) angeordnet sind.

8. Bauelement nach einem der Ansprüche 1 bis 7, **dadurch gekennzeichnet, daß** ein erstes Bauteil (10) mindestens eine planare oder gekrümmte Beugungsgitterstruktur (52) und/oder mindestens eine Anschlußstruktur (51) für polychromatisches und/oder monochromatisches Licht und ein zweites, im zusammengesetzten Zustand dem ersten Bauteil (10) gegenüberliegendes Bauteil (30) mindestens eine planare oder gekrümmte Hohlspiegelstruktur (53,54) aufweist.

9. Bauelement nach einem der Ansprüche 1 bis 8, **dadurch gekennzeichnet, daß** ein erstes Bauteil (10) eine gekrümmte Beugungsgitterstruktur und ein zweites Bauteil (30) mindestens eine Anschlußstruktur für Licht aufweist.

10. Bauelement nach einem der Ansprüche 1 bis 9, **dadurch gekennzeichnet, daß** mindestens ein Bauteil (10, 30) mindestens eine Ausnehmung zur Aufnahme eines Detektors aufweist.

11. Bauelement nach einem der Ansprüche 1 bis 10, **dadurch gekennzeichnet, daß** mindestens ein Abdeckteil (80) vorgesehen ist, das Justagemittel (40) aufweist, die mit entsprechenden Justagemitteln (40) an mindestens einem der übrigen Bauteile (10,20,30) zusammenwirken.

12. Verfahren zur Herstellung eines miniaturisierten optischen Bauelements aus mindestens zwei Bauteilen (10, 30), wovon mindestens ein Bauteil (10, 30) optische Mikrostrukturen (51 - 54) aufweist, und mindestens einem Abstandsformkörper (20), wobei die Bauteile (10 - 30) über Justagemittel (40) zusammengefügt werden, **dadurch gekennzeichnet,**
**daß** die Bauteile (10, 30) und der mindestens eine Abstandsformkörper (20) zusammen mit ihren selbstjustierenden Justagemitteln (40) jeweils in einem Schritt auf abformtechnischem Wege hergestellt werden, wobei mindestens zwei Teile (10, 20, 30) gemeinsam und über Verbindungsmittel (60 - 63) als zusammenhängende Einheit gefertigt werden

13. Verfahren nach Anspruch 12, **dadurch gekennzeichnet, daß** die Verbindungsmittel (60 - 63) aus demselben Material wie die Bauteile (10, 20, 30) und im gleichen Fertigungsschnitt hergestellt werden.

14. Verfahren nach Anspruch 12, **dadurch gekennzeichnet, daß** Verbindungsmittel (60 - 63) bei oder vor der Herstellung der Bauteile (10, 20, 30) eingelegt werden.

15. Verfahren nach einem der Ansprüche 12 bis 14, **dadurch gekennzeichnet, daß** bei der abformtechnischen Herstellung Einlegeteile umformt werden.

16. Verfahren nach Anspruch 15, **dadurch gekennzeichnet, daß** Einlegeteile aus metallischen oder keramischen Materialien verwendet werden.

17. Verfahren nach einem der Ansprüche 12 bis 16, **dadurch gekennzeichnet, daß** ein Spritzgieß-, ein Reaktionsgieß- oder ein Spritzprägeverfahren eingesetzt wird.

18. Verfahren nach einem der Ansprüche 12 bis 17, **dadurch gekennzeichnet, daß** die Teile (10, 20, 30) so hergestellt werden, daß alle mit Strukturen versehenen Wandflächen der Teile in einer gemeinsamen Ebene liegen.

19. Verfahren nach einem der Ansprüche 12 bis 18, **dadurch gekennzeichnet, daß** die Teile (10, 20, 30) in planarer Anordnung gemeinsam in eine Beschichtungseinrichtung eingebracht werden.

20. Verfahren nach einem der Ansprüche 12 bis 19, **dadurch gekennzeichnet, daß** in einer gemeinsamen Ebene liegenden Mikrostrukturen (51 - 54) flächen- und/oder strukturselektiv bearbeitet werden.

21. Verfahren nach einem der Ansprüche 12 bis 20, **dadurch gekennzeichnet, daß** eine flächen- und/oder strukturselektive Bearbeitung mittels Plasmaverfahren, Aufdampfen, Sputtern oder Galvanisieren erfolgt.

22. Verfahren nach einem der Ansprüche 12 oder 21, **dadurch gekennzeichnet, daß** eine flächen- und/oder strukturselektive Verspiegelung durchgeführt wird.

## Claims

1. Miniaturised optical component which before assembly of the individual parts consists of at least two devices, of which at least one device has optical microstructures, wherein the devices (10, 30) are connected to one another at a distance from one another via at least one spacer moulding (20), and the devices (10, 30) and the spacer moulding (20) have self-adjusting adjustment means (40) for precise relative adjustment when assembling the devices (10, 30) and the spacer moulding, **characterised in that** at least two parts (10, 20, 30) are connected to one another via connecting means (60-63) as lost security and form a coherent unit.

2. Component according to claim 1, **characterised in that** the spacer moulding is a plug-in panel common to the devices (10, 30), the adjustment means (40) of which cooperate with corresponding adjustment means (40) on the remaining devices (10, 30).

3. Component according to one of claims 1 or 2, **characterised in that** the adjustment means (40) are plug-in elements (41, 42), snap elements (44a, 44b), sliding elements (47, 48), projections (41, 42) and/or recesses (43).

4. Component according to one of claims 1 to 3, **characterised in that** the adjustment means (40) of the parts (10, 20, 30) are moulded on and/or moulded in.

5. Component according to claim 4, **characterised in that** the connecting means are small elastic fibre bands or film hinges (60-63).

6. Component according to claim 4 or 5, **characterised in that** the connecting means consist of the same material as the parts (10, 20, 30).

7. Component according to one of claims 4 to 6, **characterised in that** the connecting means are elastic and are arranged on the wall surface (14, 34) of the devices (10, 30) facing away from the structured wall surface (11, 31).

8. Component according to one of claims 1 to 7, **characterised in that** a first device (10) has at least one planar or curved diffraction grating structure (52) and/or at least one connecting structure (51) for polychromatic and/or monochromatic light and a second device (30) opposite the first device (10) in the assembled state has at least one planar or curved concave mirror structure (53, 54).

9. Component according to one of claims 1 to 8, **characterised in that** a first device (10) has a curved diffraction grating structure and a second device (30) has at least one connecting structure for light.

10. Component according to one of claims 1 to 9, **characterised in that** at least one device (10, 30) has at least one recess for receiving a detector.

11. Component according to one of claims 1 to 10, **characterised in that** at least one cover part (80) is provided, which has adjustment means (40) which cooperate with corresponding adjustment means (40) on at least one of the remaining devices (10, 20, 30).

12. Process for producing a miniaturised optical component made from at least two devices (10, 30), of which at least one device (10, 30) has optical microstructures (51-54), and at least one spacer moulding (20), wherein the devices (10, 30) are joined together via adjustment means (40), **characterised in that** the devices (10, 30) and the at least one spacer moulding (20) are produced together with their self-adjusting adjustment means (40) in each case in one step by moulding-technology means, wherein at least two parts (10, 20, 30) are made as a coherent unit together and via connecting means (60-63).

13. Process according to claim 12, **characterised in that** the connecting means (60-63) are produced from the same material as the devices (10, 20, 30) and in the same manufacturing step.

14. Process according to claim 12, **characterised in that** connecting means (60-63) are inserted during or before the production of the devices (10, 20, 30).

15. Process according to one of claims 12 to 14, **characterised in that** insertion parts have moulding around them during production by moulding technology.

16. Process according to claim 15, **characterised in that** the insertion parts made from metallic or ceramic materials are used.

17. Process according to one of claims 12 to 16, **characterised in that** an injection moulding, a reaction injection moulding or an injection-compression moulding process is used.

18. Process according to one of claims 12 to 17, **characterised in that** the parts (10, 20, 30) are produced so that all wall surfaces of the parts provided with structures lie in a common plane.

19. Process according to one of claims 12 to 18, **characterised in that** the parts (10, 20, 30) are introduced in planar arrangement together into a coating device.

20. Process according to one of claims 12 to 19, **characterised in that** microstructures (51-54) lying in a common plane are processed in surface-selective and/or structure-selective manner.

21. Process according to one of claims 12 to 20, **characterised in that** surface-selective and/or structure-selective processing takes place by means of plasma processes, evaporation coating, sputtering or galvanising.

22. Process according to one of claims 12 or 21, **characterised in that** surface-selective and/or structure-selective mirror-coating is carried out.

## Revendications

1. Composant optique miniaturisé qui est formé, avant l'assemblage des pièces constitutives, d'au moins deux pièces dont l'une au moins présente des microstructures optiques, les pièces (10, 30), espacées l'une de l'autre, étant reliées entre elles par l'intermédiaire d'au moins un corps moulé d'espacement (20), et les pièces (10, 30) et le corps moulé d'espacement (20) comportant des moyens d'ajustage (40) à ajustage automatique pour un ajustage relatif précis lors de l'assemblage des pièces (10, 30) et du corps moulé d'espacement, **caractérisé en ce qu'**au moins deux pièces (10, 20, 30) sont reliées entre elles par des moyens de lien (60-63) constituant une sécurité contre la perte et forment une unité solidaire.

2. Composant selon la revendication 1, **caractérisé en ce que** le corps moulé d'espacement est une plaque à enfichage qui est commune aux pièces (10, 30) et dont les moyens d'ajustage (40) coopèrent avec des moyens d'ajustage (40) correspondants sur les autres pièces (10, 30).

3. Composant selon l'une des revendications 1 ou 2, **caractérisé en ce que** les moyens d'ajustage (40) sont des éléments d'enfichage (41, 42), des éléments à enclenchement (44a, 44b), des éléments coulissants (47, 48), des saillies (41, 42) et/ou des évidements (43).

4. Composant selon l'une des revendications 1 à 3, **caractérisé en ce que** les moyens d'ajustage (40) sont moulés sur et/ou dans les pièces (10, 20, 30).

5. Composant selon la revendication 4, **caractérisé en ce que** les moyens de lien sont des bandes en fibres élastiques ou des charnières films (60-63).

6. Composant selon la revendication 4 ou 5, **caractérisé en ce que** les moyens de lien sont constitués du même matériau que les pièces (10, 20, 30).

7. Composant selon l'une des revendications 4 à 6, **caractérisé en ce que** les moyens de lien sont élastiques et sont ménagés sur la surface de paroi (14, 34) des pièces (10, 30) tournée à l'opposé de la surface de paroi structurée (11, 31).

8. Composant selon l'une des revendications 1 à 7, **caractérisé en ce qu'**une première pièce (10) comporte au moins une structure de réseau de diffraction (52) planaire ou courbe et/ou au moins une structure de raccordement (51) pour une lumière polychromatique et/ou monochromatique et qu'une deuxième pièce (30), située en vis-à-vis de la première pièce (10) à l'état assemblé, comporte au moins une structure de miroir concave (53, 54) plan ou courbe.

9. Composant selon l'une des revendications 1 à 8, **caractérisé en ce qu'**une première pièce (10) comporte une structure de réseau de diffraction courbe et une deuxième pièce (30) au moins une structure de raccordement pour de la lumière.

10. Composant selon l'une des revendications 1 à 9, **caractérisé en ce qu'**au moins une pièce (10, 30) comporte au moins un évidemment destiné à recevoir un détecteur.

11. Composant selon l'une des revendications 1 à 10, **caractérisé en ce qu'**il est prévu au moins une pièce de recouvrement (80) qui comporte des moyens d'ajustage (40) qui coopèrent avec des moyens d'ajustage (40) correspondants sur au moins une des autres pièces (10, 20, 30).

12. Procédé de fabrication d'un composant optique miniaturisé formé d'au moins deux pièces (10, 30), dont l'une au moins présente des microstructures optiques (51-54), et d'au moins un corps moulé d'espacement (20), les pièces (10-30) étant assemblées par l'intermédiaire de moyens d'ajustage (40), **caractérisé en ce que** les pièces (10, 30) et le corps moulé d'espacement (20), au nombre d'au moins un, sont respectivement fabriqués, conjointement avec leurs moyens d'ajustage (40) à ajustage automatique, par moulage en une opération, au moins deux pièces (10, 20, 30) étant fabriquées ensemble et formant une unité solidaire par l'intermédiaire de moyens de lien (60-63).

13. Procédé selon la revendication 12, **caractérisé en ce que** les moyens de lien (60-63) sont fabriqués dans le même matériau que les pièces (10, 20, 30) et au cours de la même étape de fabrication.

14. Procédé selon la revendication 12, **caractérisé en ce que** des moyens de lien (60-63) sont mis en place pour le moulage lors de ou avant la fabrication des pièces (10, 20, 30).

15. Procédé selon l'une des revendications 12 à 14, **caractérisé en ce que** des pièces mises en place pour le moulage sont noyées lors de la fabrication par moulage.

16. Procédé selon la revendication 15, **caractérisé en ce que** l'on utilise des pièces mises en place pour le moulage en un matériau métallique ou céramique.

17. Procédé selon l'une des revendications 12 à 16, **caractérisé en ce que** l'on a recours à un procédé de moulage par injection, de moulage réactif ou à un procédé de moulage par transfert.

18. Procédé selon l'une des revendications 12 à 17, **caractérisé en ce que** les pièces (10, 20, 30) sont fabriquées de telle façon que toutes leurs surfaces de paroi pourvues de structures soient situées dans un plan commun.

19. Procédé selon l'une des revendications 12 à 18, **caractérisé en ce que** les pièces (10, 20, 30), agencées à plat, sont insérées ensemble dans un dispositif d'enduction.

20. Procédé selon l'une des revendications 12 à 19, **caractérisé en ce que** des microstructures (51-54) situées dans un plan commun font l'objet d'un traitement sélectif vis-à-vis des surfaces et/ou des structures.

21. Procédé selon l'une des revendications 12 à 20, **caractérisé en ce qu'**un traitement sélectif vis-à-vis des surfaces et/ou des structures s'effectue au moyen d'un procédé à plasma, par dépôt par évaporation sous vide, par pulvérisation ou par galvanisation.

22. Procédé selon l'une des revendications 12 ou 21, **caractérisé en ce que** l'on procède à un dépôt réfléchissant qui est sélectif vis-à-vis des surfaces et/ou des structures.
